# EUROPÄISCHE PATENTANMELDUNG

(11) **EP 4 043 186 A1**
(43) Veröffentlichungstag der Anmeldung: **17.08.2022**
(21) Anmeldenummer: 21020076.2
(22) Anmeldetag: 16.02.2021
(51) Int. Cl.: B29C 64/135, B33Y 50/02, H04N 1/409

(54) **VERFAHREN UND VORRICHTUNG ZUR ANSTEUERUNG EINER LITHOGRAPHIEBASIERTEN ADDITIVEN FERTIGUNGSVORRICHTUNG**

(71) Anmelder: Technische Universität Wien, 1040 Wien (AT)
(72) Erfinder: Gruber, Peter, A-1140 Wien (AT); Ovsianikov, Aleksandr, A-1140 Wien (AT)
(74) Vertreter: Keschmann, Marc

(57) **Zusammenfassung**

Bei einem Verfahren zur Ansteuerung einer lithographiebasierten additiven Fertigungsvorrichtung, mit welcher ein dreidimensionales Bauteil aus einer Vielzahl von Volumenelementen herstellbar ist, wird überprüft, ob sich die Volumenelemente vollständig innerhalb des dreidimensionalen virtuellen Modells befindet, indem zumindest erste und zweite Randpunkte des Volumenelements oder des virtuellen Modells in x-y-Ebenen identifiziert werden, die in z-Richtung beabstandet sind, und das betreffende Volumenelement wird nur dann für den Herstellungsprozess vorgesehen, wenn es bezüglich der ersten und zweiten Randpunkte innerhalb des Modells liegen.

## Beschreibung

Die Erfindung betrifft ein Verfahren zur Ansteuerung einer lithographiebasierten additiven Fertigungsvorrichtung, mit welcher ein dreidimensionales Bauteil aus einer Vielzahl von Volumenelementen herstellbar ist.

Die Erfindung betrifft weiters eine Steuervorrichtung zur Ansteuerung einer lithographiebasierten additiven Fertigungsvorrichtung, mit welcher ein dreidimensionales Bauteil aus einer Vielzahl von Volumenelementen herstellbar ist.

Außerdem betrifft die Erfindung eine Vorrichtung zur lithographiebasierten generativen Fertigung eines dreidimensionalen Bauteils umfassend einen Materialträger für ein verfestigbares Material und eine Bestrahlungseinrichtung, die zur ortsselektiven Bestrahlung des verfestigbaren Materials mit wenigstens einem Strahl ansteuerbar ist, wobei die Bestrahlungseinrichtung eine optische Ablenkeinheit umfasst, um den wenigstens einen Strahl nacheinander auf Fokuspunkte innerhalb des Materials zu richten, wodurch jeweils ein am Fokuspunkt befindliches Volumenelement des Materials mittels Multiphotonenabsorption verfestigbar ist, und weiters umfassend eine Steuervorrichtung zur Ansteuerung der Bestrahlungseinrichtung, um das Bauteil entsprechend dem dreidimensionalen virtuellen Modell des Bauteils aus einer Vielzahl von verfestigten Volumenelementen aufzubauen.

Ein Verfahren zur Ausbildung eines Formkörpers, bei dem die Verfestigung eines photosensitiven Materials mittels Multiphotonenabsorption vorgenommen wird, ist beispielsweise aus der DE 10111422 A1 bekannt geworden. Dazu strahlt man mit einem fokussierten Laserstrahl in das Bad des photosensitiven Materials ein, wobei die Bestrahlungsbedingungen für einen die Verfestigung auslösenden Mehrphotonenabsorptionsprozess nur in unmittelbarer Umgebung des Fokus erfüllt sind, sodass man den Fokus des Strahls nach Maßgabe der Geometriedaten des herzustellenden Formkörpers innerhalb des Badvolumens zu den zu verfestigenden Stellen führt.

Am jeweiligen Fokuspunkt wird hierbei ein Volumenelement des Materials verfestigt, wobei benachbarte Volumenelemente aneinanderhaften und der Formkörper durch nacheinander erfolgendes Verfestigen von benachbarten Volumenelementen aufgebaut wird. Beim Aufbau des Formkörpers kann man schichtweise vorgehen, d.h. es werden zuerst Volumenelemente einer ersten Schicht verfestigt, bevor Volumenelemente einer nächsten Schicht verfestigt werden.

Bestrahlungseinrichtungen für MultiphotonenAbsorptionsverfahren umfassen eine Optik zum Fokussieren eines Laserstrahls sowie eine Ablenkeinrichtung zum Ablenken des Laserstrahls. Die Ablenkeinrichtung ist hierbei ausgebildet, um den Strahl nacheinander auf Fokuspunkte innerhalb des Materials zu fokussieren, die im Wesentlichen in ein und derselben, senkrecht zur Einstrahlrichtung des Strahls in das Material verlaufenden Ebene liegen. In einem x,y,z-Koordinatensystem wird diese Ebene auch als x,y-Ebene bezeichnet. Die durch die Strahlablenkung in der x,y-Ebene entstandenen verfestigten Volumenelemente bilden eine Schicht des Formkörpers aus.

Für den Aufbau einer nächsten Schicht erfolgt eine Veränderung der Relativposition der Bestrahlungseinrichtung relativ zum Bauteil in der z-Richtung, welche einer Einstrahlrichtung des wenigstens einen Strahls in das Material entspricht und senkrecht zur x,y-Ebene verläuft.

Durch die zumeist motorisch erfolgende Verstellung der Bestrahlungseinrichtung relativ zum Bauteil wird der Fokuspunkt der Bestrahlungseinrichtung in eine neue x,y-Ebene verlagert, welche in z-Richtung um die gewünschte Schichtdicke von der vorangehenden x,y-Ebene beabstandet ist.

Ausgangspunkt für das Herstellen eines Bauteils mittels eines additiven Fertigungsverfahrens bzw. 3D-Druckverfahrens ist ein dreidimensionales virtuelles Modell des herzustellenden Bauteils. Das virtuelles Modell wird in der Regel mittels einer CAD-Software erstellt. Aus dem virtuellen Modell müssen in der Folge Steuerdaten generiert werden, welche spezifische Anweisungen an die additive Fertigungsvorrichtung enthalten, welche diese veranlassen, das gewünschte Bauteil aus verfestigten Volumenelementen herzustellen. Die Steueranweisungen umfassen Anweisungen an die Belichtungseinheit samt Ablenkungseinheit, an eine Verstelleinrichtung zur Verstellung des Materialträgers relativ zur Bestrahlungseinrichtung und an eine Materialzuführungseinheit. Mit Rücksicht auf den schichtweisen Aufbau des Bauteils wird hierzu eine sog. Slicing-Software eingesetzt, welche das dreidimensionale virtuelle Modell des Bauteils in einen Stapel von flachen Schichten umrechnet. Jede Schicht weist dabei entsprechend des jeweiligen Querschnitts des Bauteils eine spezifische Geometrie auf, welche die additive Fertigungsvorrichtung aus einer Mehrzahl von Volumenelementen zusammensetzen soll.

Die Volumenelemente können beispielsweise rasterartig angeordnet werden, sodass zur Erzielung der jeweils gewünschten Geometrie lediglich diejenigen Volumenelemente verfestigt werden dürfen, die sich innerhalb der Geometrie befinden. Für die Feststellung, welche Volumenelemente sich innerhalb oder außerhalb der gewünschten Geometrie befinden, wird bei herkömmlichen Verfahren in der Regel lediglich die sich aus dem Raster ergebende Position des Mittelpunkts (mathematischer Punkt) des Volumenelements herangezogen. Dies bedeutet, dass Volumenelemente für das Verfestigen vorgesehen werden, deren Mittelpunkt sich innerhalb der gewünschten Geometrie befindet. Da das Volumenelement eine über den mathematischen Mittelpunkt hinausgehende räumliche Ausdehnung aufweist, führt dies in Randbereichen dazu, dass Volumenelemente hergestellt werden, die über den Rand der gewünschten Geometrie vorragen. Das hergestellte Bauteil kann daher größere Abmessungen aufweisen als dies dem virtuellen Modell entspricht. Bei Bauteilen mit inneren Kavitäten, wie z.B. Kanälen, kann dies außerdem dazu führen, dass diese mit zu kleinen Dimensionen hergestellt werden oder überhaupt zuwachsen.

Bisherige Versuche, bei der Selektion der zu verfestigenden Volumenelemente die vollständige räumliche Erstreckung der Volumenelemente zu berücksichtigen, waren sehr rechenintensiv, weil z.B. für die Berechnung der Distanz, um die ein Volumenelement versetzt werden muss, auf Basis der "cusp height" alle Dreiecke einer durch ein Netz von Dreiecken angenäherten Oberfläche des virtuellen Modells durchiteriert werden müssen.

Die Erfindung zielt daher darauf ab, ein Verfahren und eine Vorrichtung bereitzustellen, mit der ohne übermäßigen Rechenaufwand Bauteile hergestellt werden können, deren Volumenelemente möglichst nicht über die durch das virtuelle Modell vorgegebenen Grenzflächen des Bauteils vorstehen.

Zur Lösung dieser Aufgabe sieht die Erfindung ein Verfahren vor zur Ansteuerung einer lithographiebasierten additiven Fertigungsvorrichtung, mit welcher ein dreidimensionales Bauteil aus einer Vielzahl von Volumenelementen herstellbar ist, umfassend die folgenden Schritte:
a) Bereitstellen eines dreidimensionalen virtuellen Modells des Bauteils in einem virtuellen dreidimensionalen Raum mit einem Koordinatensystem umfassend eine x-, y- und z-Achse,
b) Aufteilen des virtuellen Raums in eine Vielzahl von virtuellen Volumenelementen, wobei jedes Volumenelement eine Erstreckung in der x-y-Ebene und eine sich von einer Koordinate z1 zu einer Koordinate z2 erstreckende Höhe in der z-Richtung aufweist,
c) Überprüfen, ob sich eine Volumenelement vollständig innerhalb des dreidimensionalen virtuellen Modells befindet, umfassend:
   i) Identifizieren von die z1-Koordinate aufweisenden ersten Randpunkten des Volumenelements oder des virtuellen Modells und Identifizieren von die z2-Koordinate aufweisenden zweiten Randpunkten des Volumenelements oder des virtuellen Modells,
   ii) Prüfen, ob die ersten Randpunkte des Volumenelements sich innerhalb des virtuellen Modells befinden oder ob sich das Volumenelement vollständig innerhalb der ersten Randpunkte des virtuellen Modells befindet, und
   iii) Prüfen, ob die zweiten Randpunkte des Volumenelements sich innerhalb des virtuellen Modells befinden oder ob sich das Volumenelement vollständig innerhalb der zweiten Randpunkte des virtuellen Modells befindet,
d) nur bei positiver Prüfung von zumindest ii) und iii): Vormerken des Volumenelements als herzustellendes Volumenelement,
e) Wiederholen der Schritte c) und d) für eine Vielzahl von Volumenelementen,
f) Übermitteln von Steuerungsdaten an die Fertigungsvorrichtung, welche geeignet sind, die Herstellung der herzustellenden Volumenelemente zu bewirken.

Die Entscheidung darüber, ob ein bestimmtes Volumenelement hergestellt bzw. gedruckt werden soll oder nicht, beruht somit auf der Betrachtung von mindestens zwei Ebenen, die in Höhenrichtung des Volumenelements voneinander beabstandet sind, und zwar am unteren Ende des Volumenelements (z1-Koordinate) und am oberen Ende (z2-Koordinate) des Volumenelements. Für jede Ebene wird überprüft, ob Randpunkte des Volumenelements sich außerhalb oder innerhalb der Grenzfläche des virtuellen Modells befinden und das Volumenelement wird nur dann gedruckt, wenn die Randpunkte sich in beiden Querschnitten innerhalb des Modells befinden. Alternativ wird für jede Ebene überprüft, ob sich das Volumenelement in der betrachteten Ebene vollständig innerhalb der Randpunkte des Volumenelements befindet und das Volumenelement wird nur dann gedruckt, wenn das Volumenelement sich in allen betrachteten Ebenen innerhalb des Modells befindet.

Dabei wird von der Annahme ausgegangen, dass ein Volumenelement, das in den beiden genannten Ebenen nicht über das Modell vorsteht, die Grenzflächen des Modells auch in den dazwischen liegenden Ebenen nicht überragt. Diese Annahme ist bei einem Großteil von Formgebungen des Modells berechtigt. In speziellen Fällen, wie z.B. bei nach innen gewölbten Außenkonturen oder bei Innenhohlräumen, ist es jedoch bevorzugt, zumindest eine zusätzliche Ebene einzubeziehen und ein Volumenelement nur dann zu drucken, wenn Randpunkte des Volumenelements in allen drei oder mehr Ebenen nicht über den jeweiligen Querschnitt des Modells vorragen.

Diesbezüglich sieht eine bevorzugte Ausbildung des erfindungsgemäßen Verfahrens vor, dass Schritt c) weiters umfasst:
iv) Identifizieren von eine z3-Koordinate aufweisenden dritten Randpunkten des Volumenelements oder des virtuellen Modells, wobei die z3-Koordinate zwischen der z1- und der z2-Koordinate liegt,
v) Prüfen, ob die dritten Randpunkte des Volumenelements sich innerhalb des virtuellen Modells befinden oder ob sich das Volumenelement vollständig innerhalb der dritten Randpunkte des virtuellen Modells befindet,
wobei das Volumenelement in Schritt d) nur bei positiver Prüfung von zumindest ii) und iii) und v) als herzustellendes Volumenelement vorgemerkt wird.

Wenn eine dritte Ebene herangezogen wird, so ist es vorteilhaft diesen in der Mitte zwischen der obersten und der untersten Ebene anzuordnen. Die z3-Koordinate liegt dann in der Mitte zwischen der untersten Ebene (z1-Koordinate) und der obersten Ebene (z2-Koordinate).

Die ersten, zweiten bzw. dritten Randpunkte können auf verschiedene Weise identifiziert werden. Bei den Randpunkten kann es sich um vereinzelte, diskrete Punkte am Umfangs des Volumenelements bzw. des virtuellen Modells handeln.

Alternativ können die Punkte zusammen den gesamten Umfang des Volumenelements bzw. des virtuellen Modells bilden, der in der jeweiligen Ebene liegt, d.h. die Randpunkte können zu einer Randlinie verschmelzen. Die Randlinie entspricht dem Rand eines Schnitts, der in derjenigen Ebene, welche in der z1, z2 bzw. z3-Koorindate liegt.

Für das Erstellen der Schnitte kann der Schnitt eines Körpers mit einer Ebene einer Slicing-Software verwendet werden, sodass auf gesonderte Operationen und den damit verbundenen Rechenaufwand verzichtet werden kann.

Bevorzugte Ausführungsformen der Erfindung sehen daher vor, dass die ersten Randpunkte des Volumenelements durch Erstellen eines ersten Schnitts des virtuellen Modells in einer x-y-Ebene mit der z1-Koordinate des Volumenelements identifiziert werden, dass die zweiten Randpunkte des Volumenelements durch Erstellen eines zweiten Schnitts des virtuellen Modells in einer x-y-Ebene mit der z2-Koordinate des Volumenelements identifiziert werden, bzw. dass die dritten Randpunkte des Volumenelements durch Erstellen eines dritten Schnitts des virtuellen Modells in einer x-y-Ebene mit der z3-Koordinate des Volumenelements identifiziert werden. Die Überprüfung, ob sich ein Volumenelement vollständig innerhalb des dreidimensionalen virtuellen Modells befindet, umfasst in diesem Fall bevorzugt den Schritt des Prüfens, ob der jeweilige Schnitt des Volumenelements sich vollständig innerhalb des entsprechenden Querschnitts des virtuellen Modells befindet.

Eine alternative Ausführungsformen der Erfindung sieht vor, dass die ersten Randpunkte des virtuellen Modells durch Erstellen eines ersten Schnitts des virtuellen Modells in einer x-y-Ebene mit der z1-Koordinate des Volumenelements identifiziert werden, dass die zweiten Randpunkte des virtuellen Modells durch Erstellen eines zweiten Schnitts des virtuellen Modells in einer x-y-Ebene mit der z2-Koordinate des Volumenelements identifiziert werden, bzw. dass die dritten Randpunkte des virtuellen Modells durch Erstellen eines dritten Schnitts des virtuellen Modells in einer x-y-Ebene mit der z3-Koordinate des Volumenelements identifiziert werden. Die Überprüfung, ob sich ein Volumenelement vollständig innerhalb des dreidimensionalen virtuellen Modells befindet, umfasst in diesem Fall bevorzugt den Schritt des Prüfens, ob sich das Volumenelement in den jeweiligen Ebenen vollständig innerhalb der erwähnten Schnitte des virtuellen Modells befindet.

Die Prüfung, ob sich eine Volumenelement in einer zl-Ebene, einer z2-Eben und ggf. weiteren dazwischen liegenden Ebenen vollständig innerhalb des dreidimensionalen virtuellen Modells befindet, kann auch derart erfolgen, dass Schnitte des virtuellen Modells in der zl-Ebene, in der z2-Ebene und ggf. in dazwischen liegenden Ebenen vorgenommen werden und der Durchschnitt der Schnitte (Boolsche UND-Operation) in z-Projektionsrichtung ermittelt wird und geprüft wird, ob das Volumenelement vollständig innerhalb des Durschnitts liegt. Dabei wird davon ausgegangen, dass das Volumenelement über seine z-Erstreckung einen konstanten Querschnitt aufweist. Ist dies nicht der Fall, z.B. im Falle eines Volumenelements in der Form eines Ellipsoids, wird die Randlinie des Durchschnitts der Schnitte um den Betrag, um den der Querschnitt des Volumenelements über die z-Erstreckung variiert, nach innen gerückt und die derart angepasste Durchschnittsfläche für die Prüfung herangezogen, ob das Volumenelement vollständig innerhalb des Durchschnitts liegt.

Die Prüfung, ob sich eine Volumenelement in einer zl-Ebene, einer z2-Eben und ggf. weiteren dazwischen liegenden Ebenen vollständig innerhalb des dreidimensionalen virtuellen Modells befindet, kann alternativ derart erfolgen, dass in einer z1-Ebene ein Schnitt des virtuellen Modells erstellt wird, danach geprüft wird, ob sich das Volumenelement in dieser Ebene vollständig innerhalb des Schnitts des virtuellen Modells befindet, und dann geprüft wird, ob in z-richtung verlaufende Projektionen von in der z1-Ebene ermittelten Randpunkten des Volumenelements wenigstens einen innerhalb der z1-z2-Erstreckung des Volumenelements gelegenen Schnittpunkt mit dem Umriss des virtuellen Modells aufweisen. Wenn sich wenigstens ein Schnittpunkt ergibt, bedeutet dies, dass das Volumenelement sich nicht über seine gesamte z-Erstreckung vollständig innerhalb des virtuellen Modells befindet, sodass dieses Volumenelement nicht als herzustellendes bzw. zu druckendes Volumenelement vorgemerkt wird.

Wenn im Rahmen der Erfindung auf ein Koordinatensystem umfassend eine x-, y- und z-Achse Bezug genommen wird, kann dies verschiedene Arten von Koordinatensystemen umfassen. Insbesondere kann es sich hierbei um ein geradliniges Koordinatensystem handeln. Das geradlinige Koordinatensystem muss jedoch kein orthogonales Koordinatensystem sein, sondern umfasst auch Ausführungen, bei denen die x-y-Ebene und die z-Achse einen Winkel ungleich 90° einschließen. Bevorzugt handelt es sich jedoch um ein Kartesisches Koordinatensystem.

Die Richtung der z-Achse entspricht bevorzugt der Einstrahlrichtung der Bestrahlungseinrichtung, d.h. der Richtung, in der die Lichtstrahlen auf Fokuspunkte innerhalb des Materials gerichtet werden.

Schritt b) des Verfahrens sieht vor, dass der virtuelle Raum, in dem sich das virtuelle Modell befindet, in eine Vielzahl von virtuellen Volumenelementen aufgeteilt wird und die Schritte c) und d) sehen in der Folge vor, dass zumindest für einige dieser Volumenelemente überprüft wird, ob diese innerhalb des virtuellen Modells liegen. Die im virtuellen Raum verteilten Volumenelemente können dabei in verschiedenen räumlichen Anordnungen vorliegen. Beispielsweise können die Volumenelemente in einem vorgegebenen Raster angeordnet sein, wie z.B. in einem dreidimensionalen Raster, in dem die Volumenelemente entlang einer Vielzahl von jeweils parallel zueinander verlaufender Linien angeordnet sind, die in x-, y- und z-Richtung eines rechtwinkeligen räumlichen Koordinatensystems verlaufen.

Weiters können die Volumenelemente so angeordnet sein, dass sie einander überlappen oder dass sie einander nicht überlappen. Es kann beispielsweise vorgesehen sein, dass die Volumenelemente einander in einem Teilbereich des Modells überlappen und einem anderen Teilbereich nicht überlappend angeordnet sind. Alternativ können die Volumenelemente im gesamten Modell überlappend angeordnet sein.

Der Überlappungsgrad muss nicht gleichmäßig sein, sondern kann abhängig von der lokalen Geometrie des Modells gewählt sein. Beispielsweise kann am Rand des Modells ein höherer Überlappungsgrad gewählt sein als im Inneren des Modells. Dadurch kann die Auflösung des Druckprozesses in den Randbereichen sowie die Geometrietreue erhöht bzw. die Oberflächenrauhigkeit reduziert werden.

Die virtuellen Volumenelemente können alle das gleiche Volumen aufweisen oder es können virtuelle Volumenelemente innerhalb ein- und desselben virtuellen Modells verwendet werden, die voneinander verschiedene Volumina aufweisen.

Gemäß Schritt e) ist vorgesehen, dass die Überprüfung, ob sich eine Volumenelement vollständig innerhalb des dreidimensionalen virtuellen Modells befindet, für eine Vielzahl von Volumenelementen weiderholt wird. Dabei kann so vorgegangen werden, dass diese Überprüfung für alle Volumenelemente des virtuellen Modells vorgenommen wird, z.B. für alle Volumenelemente, die nicht von vornherein vollständig außerhalb des Modells liegen. Alternativ kann die Überprüfung auch für nur eine Teilmenge der Volumenelemente erfolgen, bevorzugt für diejenigen Volumenelemente, welche sich im Randbereich, d.h. entlang der Grenzfläche des Modells befinden.

Die der Erfindung zugrundliege Aufgabe wird auch durch eine Steuervorrichtung gelöst, umfassend eine Rechenvorrichtung, welche umfasst:
- einen elektronischen Speicher zum Speichern eines dreidimensionalen virtuellen Modells des Bauteils in einem virtuellen dreidimensionalen Raum mit einem Koordinatensystem umfassend eine x-, y- und z-Achse,
- Modellverarbeitungsmittel, welchen das virtuelle Modell des Bauteils zugeführt ist und in denen der virtuelle Raum des virtuellen Modells in eine Vielzahl von virtuellen Volumenelementen aufgeteilt ist, wobei jedes Volumenelement eine Erstreckung in der x-y-Ebene und eine sich von einer Koordinate z1 zu einer Koordinate z2 erstreckende Höhe in der z-Richtung aufweist,
wobei die Modellverarbeitungsmittel ausgebildet sind zum
i) Identifizieren von eine z1-Koordinate aufweisenden dritten Randpunkten des Volumenelements oder des virtuellen Modells und Identifizieren von eine z2-Koordinate aufweisenden dritten Randpunkten des Volumenelements oder des virtuellen Modells,
ii) Prüfen, ob die ersten Randpunkte des Volumenelements sich innerhalb des virtuellen Modells befinden oder ob sich das Volumenelement vollständig innerhalb der ersten Randpunkte des virtuellen Modells befindet, und
iii) Prüfen, ob die zweiten Randpunkte des Volumenelements sich innerhalb des virtuellen Modells befinden oder ob sich das Volumenelement vollständig innerhalb der zweiten Randpunkte des virtuellen Modells befindet,
wobei die Modellverarbeitungsmittel ein Logikmodul umfassen, das ausgebildet ist, um nur bei positiver Prüfung von zumindest ii) und iii) das Volumenelement als herzustellendes Volumenelement vorzumerken,
- Codierungsmittel zur Erstellen von Steuerungsdaten umfassend Steueranweisungen zur additiven Fertigung der herzustellenden Volumenelemente,
- Datenübertragungsmittel zum Übermitteln der Steuerungsdaten an die Fertigungsvorrichtung.

Bevorzugt ist vorgesehen, dass die Modellverarbeitungsmittel ausgebildet sind zum
iv) Identifizieren von eine z3-Koordinate aufweisenden dritten Randpunkten des Volumenelements oder des virtuellen Modells, wobei die z3-Koordinate zwischen der z1- und der z2-Koordinate liegt, und
v) Prüfen, ob die dritten Randpunkte des Volumenelements sich innerhalb des virtuellen Modells befinden oder ob sich das Volumenelement vollständig innerhalb der dritten Randpunkte des virtuellen Modells befindet,
und dass das Logikmodul ausgebildet ist, um nur bei positiver Prüfung von zumindest ii) und iii) und v) als herzustellendes Volumenelement vorzumerken.

Ein weiterer Aspekt der Erfindung betrifft eine Vorrichtung zur lithographiebasierten generativen Fertigung eines dreidimensionalen Bauteils umfassend einen Materialträger für ein verfestigbares Material und eine Bestrahlungseinrichtung, die zur ortsselektiven Bestrahlung des verfestigbaren Materials mit wenigstens einem Strahl ansteuerbar ist, wobei die Bestrahlungseinrichtung eine optische Ablenkeinheit umfasst, um den wenigstens einen Strahl nacheinander auf Fokuspunkte innerhalb des Materials zu fokussieren, wodurch jeweils ein am Fokuspunkt befindliches Volumenelement des Materials mittels Multiphotonenabsorption verfestigbar ist, und weiters umfassend eine Steuervorrichtung zur Ansteuerung der Bestrahlungseinrichtung, um das Bauteil entsprechend dem dreidimensionalen virtuellen Modell des Bauteils aus einer Vielzahl von verfestigten Volumenelementen aufzubauen.

Bevorzugt ist vorgesehen, dass die Bestrahlungseinrichtung ausgebildet ist, um das Bauteil schichtweise mit sich in der x-y-Ebene erstreckenden Schichten aufzubauen, und dass eine Verstelleinrichtung zur Verstellung des Materialträgers relativ zur Bestrahlungseinrichtung in der z-Richtung vorgesehen ist, sodass der Wechsel von einer Schicht zu einer nächsten Schicht durch die Verstelleinrichtung erfolgt.

Bevorzugt umfasst die Bestrahlungseinrichtung eine Laserlichtquelle und die Ablenkeinheit ist zum Scannen des verfestigbaren Materials innerhalb eines Schreibbereichs ausgebildet. Dabei erfolgt die Ablenkung des Lichtstrahls in der x- oder der y-Richtung oder in beiden Richtungen. Die Ablenkungseinheit kann beispielsweise als Galvanometer-Scanner ausgebildet sein. Zur zweidimensionalen Strahlablenkung kann entweder ein Spiegel in zwei Richtungen ausgelenkt oder mittels drei oder mehr Spiegel als Single Pivot-Point-Scanner werden. Alternativ werden zwei orthogonal drehbare stehende Spiegel nahe beieinander aufgestellt oder mittels Relaisoptik verbunden über die der Strahl reflektiert wird. Die beiden Spiegel können von je einem Galvanometerantrieb oder Elektromotor angetrieben werden.

Eine bevorzugte Ausbildung der Vorrichtung sieht vor, dass das Material auf einem Materialträger, wie z.B. in einer Wanne, vorliegt, und die Bestrahlung des Materials von unten durch den für die Strahlung zumindest bereichsweise durchlässigen Materialträger erfolgt. Hierbei kann eine Bauplattform in Abstand vom Materialträger positioniert und das Bauteil durch Verfestigen von zwischen der Bauplattform und dem Materialträger befindlichem Material auf der Bauplattform aufgebaut werden. Alternativ ist es aber auch möglich, die Bestrahlung des Materials von oben vorzunehmen.

Die Strukturierung eines geeigneten Materials mittels Multiphotonenabsorption bietet den Vorteil einer überaus hohen Strukturauflösung, wobei Volumenelemente mit minimalen Strukturgrößen von bis zu 50nm x 50nm x 50nm erzielbar sind. Bedingt durch das kleine Fokuspunktvolumen ist der Durchsatz eines solchen Verfahrens allerdings sehr gering, da z.B. für ein Volumen von lmm3 bei einem Voxelvolumen von 1µm³ insgesamt mehr als 10⁹ Punkte belichtet werden müssen. Dies führt zu sehr langen Bauzeiten, was der Hauptgrund für den geringen industriellen Einsatz von Multiphotonenlithographie-Verfahren ist.

Um den Bauteiledurchsatz zu erhöhen ohne die Möglichkeit einer hohen Strukturauflösung zu verlieren, sieht eine bevorzugte Weiterentwicklung der Erfindung vor, dass das Volumen des Fokuspunkts während des Aufbaus des Bauteils zumindest einmal variiert wird, sodass das Bauteil aus verfestigten Volumenelementen unterschiedlichen Volumens aufgebaut wird.

Durch das variable Volumen des Fokuspunktes sind (bei kleinem Fokuspunktvolumen) hohe Auflösungen möglich. Gleichzeitig ist (bei großem Fokuspunktvolumen) eine hohe Schreibgeschwindigkeit (gemessen in mm3/h) erzielbar. Durch das Variieren des Fokuspunktvolumens kann also eine hohe Auflösung mit großem Durchsatz kombiniert werden. Die Variation des Fokuspunktvolumens kann dabei zum Beispiel so genutzt werden, dass im Inneren des aufzubauenden Bauteils ein großes Fokuspunktvolumen verwendet wird, um den Durchsatz zu erhöhen, und an der Oberfläche des Bauteils ein kleineres Fokuspunktvolumen zur Anwendung kommt, um die Bauteiloberfläche mit hoher Auflösung auszubilden. Eine Vergrößerung des Fokuspunktvolumens ermöglicht einen höheren Strukturierungsdurchsatz, da das in einem Belichtungsvorgang verfestigte Materialvolumen vergrößert wird. Um bei hohem Durchsatz eine hohe Auflösung beizubehalten, können kleine Fokuspunktvolumina für feinere Strukturen und Oberflächen, und größere Fokuspunktvolumina für grobe Strukturen und/oder zum Füllen von Innenräumen verwendet werden. Verfahren und Vorrichtungen zur Veränderung des Fokuspunktvolumens sind in der WO 2018/006108 A1 beschrieben.

Dementsprechend können die virtuellen Volumenelemente, die im virtuellen Raum des Modells angeordnet werden, unterschiedliche Volumina aufweisen. Beispielsweise können die virtuellen Volumenelemente im Inneren des virtuellen Modells des Bauteils ein größeres Volumen aufweisen als die an der Oberfläche des virtuellen Modells angeordneten virtuellen Volumenelemente.

Das Prinzip der Multiphotonenabsorption wird im Rahmen der Erfindung genutzt, um im photosensitiven Materialbad einen photochemischen Vorgang zu initiieren. Multiphotonenabsorptionsverfahren umfassen beispielsweise auch Verfahren der 2-Photonenabsorption. Als Folge der photochemischen Reaktion kommt es zur Veränderung des Materials in mindestens einen anderen Zustand, wobei es typischerweise zu einer Verfestigung bzw. Photopolymerisation kommt. Das Prinzip der Multiphotonenabsorption beruht darauf, dass der genannte photochemische Vorgang nur in jenen Bereichen des Strahlengangs stattfindet, in denen eine für die Multiphotonenabsorption ausreichende Photonendichte vorliegt. Die höchste Photonendichte tritt im Brennpunkt des optischen Abbildungssystems auf, sodass die Multiphotonenabsorption mit ausreichender Wahrscheinlichkeit nur im Fokuspunkt auftritt. Außerhalb des Brennpunktes ist die Photonendichte geringer, sodass die Wahrscheinlichkeit der Multiphotonenabsorption außerhalb des Brennpunktes zu gering ist, um eine unumkehrbare Veränderung des Materials durch eine photochemische Reaktion zu bewirken. Die elektromagnetische Strahlung kann in der verwendeten Wellenlänge weitestgehend ungehindert das Material passieren und nur im Fokuspunkt kommt es zu einer Interaktion zwischen photosensitivem Material und elektromagnetischer Strahlung. Das Prinzip der Multiphotonenabsorption ist beispielsweise in Zipfel et al, "Nonlinear magic: multiphoton microscopy in the biosciences", NATURE BIOTECHNOLOGY VOLUME 21 NUMBER 11 NOVEMBER 2003, beschrieben.

Als Quelle für die elektromagnetische Strahlung kann es sich vorzugsweise um einen kollimierten Laserstrahl handeln. Der Laser kann sowohl eine oder mehrere, feste oder variable Wellenlängen emittieren. Insbesondere handelt es sich um einen kontinuierlichen oder gepulsten Laser mit Pulslängen im Nanosekunden-, Pikosekunden- oder Femtosekunden-Bereich. Ein gepulster Femtosekundenlaser bietet dabei den Vorteil, dass eine geringere mittlere Leistung für die Multiphotonenabsorption benötigt wird.

Unter photosensitivem Material wird jedes unter Baubedingungen fließfähige oder feste Material verstanden, das durch Multiphotonenabsorption im Fokuspunktvolumen in einen zweiten Zustand übergeht - beispielsweise durch Polymerisation. Die Materialveränderung muss sich dabei auf das Fokuspunktvolumen und dessen direkte Umgebung begrenzen. Die Veränderung der Substanzeigenschaften kann dauerhaft sein und beispielsweise in einer Veränderung von einem flüssigen in einen festen Zustand bestehen, kann jedoch auch nur vorübergehend sein. Auch eine dauerhafte Veränderung kann im Übrigen reversibel oder nicht reversibel sein. Die Änderung der Materialeigenschaften muss nicht zwingend vollständig von einem in den anderen Zustand übergehen, sondern kann auch als Mischform beider Zustände vorliegen.

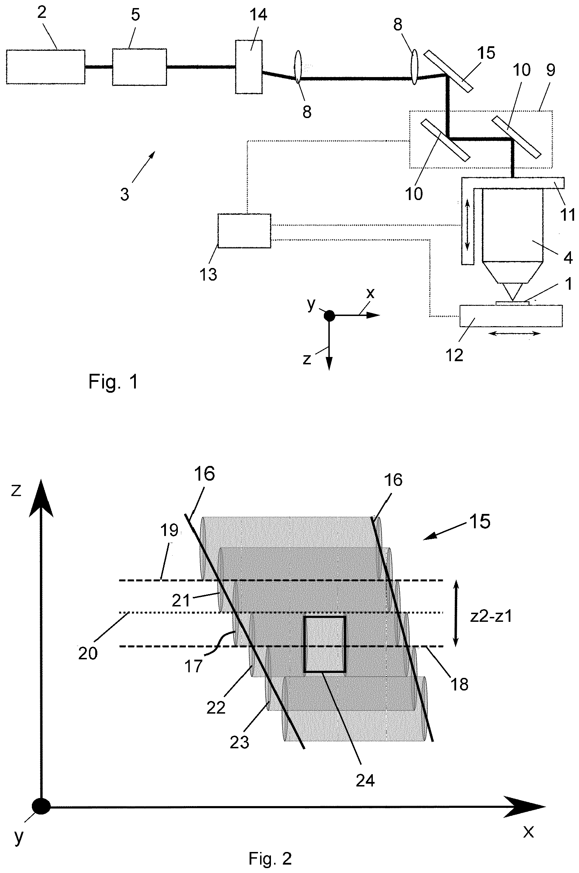

Die Erfindung wird nachfolgend anhand von in der Zeichnung schematisch dargestellten Ausführungsbeispielen näher erläutert. In dieser zeigen Fig. 1 eine schematische Darstellung einer erfindungsgemäßen Vorrichtung und Fig. 2 bis Fig. 4 schematische Darstellungen eines virtuellen Modells eines Bauteils mit Volumenelementen.

In Fig. 1 ist ein Substrat bzw. Träger mit 1 bezeichnet, auf welchem ein Bauteil aufgebaut werden soll. Das Substrat ist in einer nicht dargestellten Materialwanne angeordnet, welche mit einem photopolymerisierbaren Material gefüllt ist. In das Material wird ein von einer Strahlungsquelle 2 ausgesendeter Laserstrahl mittels einer Bestrahlungseinrichtung 3 nacheinander auf Fokuspunkte innerhalb des photopolymerisierbaren Materials fokussiert, wodurch jeweils ein am Fokuspunkt befindliches Volumenelement des Materials mittels Multiphotonenabsorption verfestigt wird. Die Bestrahlungseinrichtung umfasst zu diesem Zweck eine Abbildungseinheit umfassend ein Objektiv 4, welches den Laserstrahl innerhalb eines Schreibbereichs in das Material einbringt.

Der Laserstrahl gelangt von der Strahlungsquelle 2 zunächst in einen Pulskompressor 5 und wird danach über einen Modulator der Laserleistung (z.B.: einen akustooptischen Modulator) 14, Relaislinsen 8 und einen Umlenkspiegel 15 in eine Ablenkeinheit 9 geführt, in dem der Strahl nacheinander an zwei Spiegeln 10 reflektiert wird. Die Spiegel 10 sind um Drehachsen schwenkbar angetrieben, die zueinander vorzugsweise orthogonal verlaufen, sodass der Strahl sowohl in der x- als auch in der y-Achse ausgelenkt werden kann. Die beiden Spiegel 10 können von je einem Galvanometerantrieb oder Elektromotor angetrieben werden. Der aus der Ablenkeinheit 9 austretende Strahl gelangt bevorzugt über ein nicht dargestelltes Relais-Linsensystem in das Objektiv, welches den Strahl wie bereits erwähnt in das photopolymerisierbare Material fokussiert.

Um das Bauteil schichtweise aufzubauen, werden im Material Volumenelemente einer Schicht nach der anderen verfestigt. Zum Aufbau einer ersten Schicht wird der Laserstrahl nacheinander auf Fokuspunkte, die in der Fokusebene des Objektivs 4 angeordnet sind, innerhalb des Materials fokussiert. Die Ablenkung des Strahls in der x,y-Ebene erfolgt hierbei mit Hilfe der Ablenkeinheit 9, wobei der Schreibbereich durch das Objektiv 4 begrenzt ist. Für den Wechsel in die nächste Ebene wird das an einem Träger 11 befestigte Objektiv 4 in z-Richtung relativ zum Substrat 1 um den Schichtlagenabstand verstellt, welcher der Schichtdicke entspricht. Alternativ kann auch das Substrat 1 relativ zum feststehenden Objektiv 4 verstellt werden.

Wenn das herzustellende Bauteil in x- und/oder y-Richtung größer ist als der Schreibbereich des Objektivs 4, werden Teilstrukturen des Bauteils nebeneinander aufgebaut (sog. Stitching). Dazu ist das Substrat 1 auf einem Kreuztisch 12 angeordnet, der in x- und/oder y-Richtung relativ zur Bestrahlungseinrichtung 3 verschiebbar ist.

Weiters ist eine Steuerung 13 vorgesehen, welche die Strahlungsquelle, die Ablenkeinrichtung 9, den Träger 11 und den Kreuztisch 12 ansteuert.

Fig. 2 zeigt schematisch ein Koordinatensystem umfassend eine x-, y- und z-Achse. Im Koordinatensystem ist ein Ausschnitt eines virtuellen Modells 15 eines herzustellenden Bauteils angeordnet, wobei das virtuelle Modell 15 in der x-z-Ebene durch die Linien 16 begrenzt wird. Im Inneren des virtuellen Modells 15 ist ein Kanal 24 vorgesehen, der von verfestigtem Material freibleiben soll. In den virtuellen Raum wird eine Vielzahl von virtuellen Volumenelementen 17, 21, 22, 23 etc. angeordnet, wobei anhand der virtuellen Volumenelemente 17 gezeigt ist, dass diese eine sich von einer Koordinate z1 zu einer Koordinate z2 erstreckende Höhe (z2-z1) in der z-Richtung aufweisen. Die Volumenelemente 17 erstrecken sich in Höhenrichtung somit zwischen einer x-y-Ebene 18, die auf der z1-Koordinate liegt, und einer x-y-Ebene 19, die auf der z2-Koordinate liegt. Die Mittelebene der Volumenelemente 17 ist mit 20 bezeichnet. Die Volumenelemente sind im hier dargestellten Beispiel in einer Mehrzahl von Ebenen angeordnet, die in z-Richtung voneinander beabstandet sind. Oberhalb und unterhalb der Volumenelemente 17 befinden sich noch weitere Ebenen von Volumenelementen 21, 22, 23 etc, wobei sich die Volumenelemente benachbarter Ebenen überlappen können. Innerhalb der einzelnen Ebenen ist eine Vielzahl von Volumenelementen angeordnet, von denen in Fig. 2 jeweils nur die randseiteigen Volumenelemente deutlich dargestellt sind, wobei die Form eines Rotationsellipsoids erkennbar ist.

Fig. 2 zeigt ein Verfahren nach dem Stand der Technik, mit welchem im Randbereich des virtuellen Modells 15 festgestellt wird, welche der virtuellen Volumenelemente als herzustellende Volumenelemente vorgemerkt und in der Folge mit einer additiven Fertigungsvorrichtung, d.h. einem 3D-Drucker, tatsächlich gedruckt werden. Beim Verfahren gemäß Fig. 2 wird lediglich die Mittelebene 20 oder der Mittelpunkt der Volumenelemente betrachtet und es wird geprüft, ob das Volumenelement in der Mittelebene innerhalb oder außerhalb des virtuellen Modells 15 liegt bzw. ob der Mittelpunkt des Volumenelements innerhalb oder außerhalb des virtuellen Modells 15 liegt. Weil die tatsächliche räumliche Erstreckung der Volumenelemente über die Mittelebene hinausreicht, führt dies dazu, dass Volumenelemente für das Drucken vorgemerkt werden, die über den Umriss des virtuellen Modells hinausragen, wie in Fig. 2 ersichtlich. Weiters führt dies dazu, dass Volumenelemente gedruckt werden, die den Kanal 24 zuwachsen lassen.

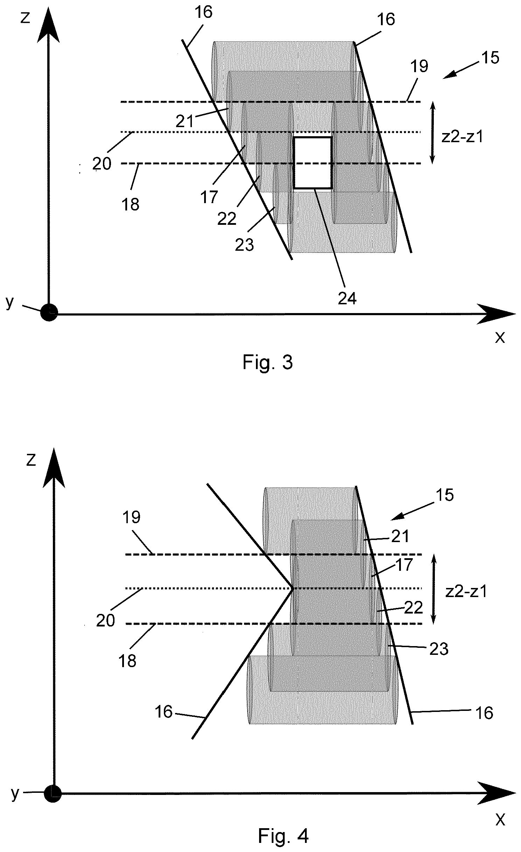

Bei der erfindungsgemäßen Verfahrensweise gemäß Fig. 3 hingegen wird nicht in der Mittelebene 20, sondern sowohl in der obersten Ebene 19 (Koordinate z2) als auch in der untersten Ebene 18 (Koordinate z1) geprüft, ob die Volumenelemente 17 innerhalb der Begrenzungen 16 des virtuellen Modells 15 liegen. Ein Volumenelement wird nur dann für das Drucken vorgemerkt, wenn es sowohl in der obersten Ebene 19 als auch in der untersten Ebene 18 innerhalb des virtuellen Modells 15 liegt. Dies führt dazu, dass bei der in Fig. 3 dargestellten Geometrie des virtuellen Modells 15 keines der Volumenelemente über den Umriss des Modells 15 hinausragt und dass der Kanal vollständig frei bleibt.

Bei der in Fig. 4 dargestellten Geometrie des virtuellen Modells 15, bei der die linke Begrenzung 16 einen nach innen gerichteten Knick aufweist, muss zusätzlich zur obersten Ebene 19 und zur untersten Ebene 18 die Mittelebene 20 berücksichtigt werden. Es werden somit nur solche Volumenelemente für das Drucken vorgemerkt, die sowohl in der obersten Ebene 19 als auch in der untersten Ebene 18 als auch in der Mittelebene 20 innerhalb des virtuellen Modells 15 liegen. Dies führt dazu, dass auch im Bereich des Knicks keines der Volumenelemente über den Umriss des Modells 15 hinausragt.

## Patentansprüche

1. Verfahren zur Ansteuerung einer lithographiebasierten additiven Fertigungsvorrichtung, mit welcher ein dreidimensionales Bauteil aus einer Vielzahl von Volumenelementen herstellbar ist, umfassend die folgenden Schritte:
a) Bereitstellen eines dreidimensionalen virtuellen Modells des Bauteils in einem virtuellen dreidimensionalen Raum mit einem Koordinatensystem umfassend eine x-, y- und z-Achse,
b) Aufteilen des virtuellen Raums in eine Vielzahl von virtuellen Volumenelementen, wobei jedes Volumenelement eine Erstreckung in der x-y-Ebene und eine sich von einer Koordinate z1 zu einer Koordinate z2 erstreckende Höhe in der z-Richtung aufweist,
c) Überprüfen, ob sich eine Volumenelement vollständig innerhalb des dreidimensionalen virtuellen Modells befindet, umfassend:
i) Identifizieren von die z1-Koordinate aufweisenden ersten Randpunkten des Volumenelements oder des virtuellen Modells und Identifizieren von die z2-Koordinate aufweisenden zweiten Randpunkten des Volumenelements oder des virtuellen Modells,
ii) Prüfen, ob die ersten Randpunkte des Volumenelements sich innerhalb des virtuellen Modells befinden oder ob sich das Volumenelement vollständig innerhalb der ersten Randpunkte des virtuellen Modells befindet, und
iii) Prüfen, ob die zweiten Randpunkte des Volumenelements sich innerhalb des virtuellen Modells befinden oder ob sich das Volumenelement vollständig innerhalb der zweiten Randpunkte des virtuellen Modells befindet,
d) nur bei positiver Prüfung von zumindest ii) und iii): Vormerken des Volumenelements als herzustellendes Volumenelement,
e) Wiederholen der Schritte c) und d) für eine Vielzahl von Volumenelementen,
f) Übermitteln von Steuerungsdaten an die Fertigungsvorrichtung, welche geeignet sind, die Herstellung der herzustellenden Volumenelemente zu bewirken.

2. Verfahren nach Anspruch 1, **dadurch gekennzeichnet, dass** Schritt c) weiters umfasst:
iv) Identifizieren von eine z3-Koordinate aufweisenden dritten Randpunkten des Volumenelements oder des virtuellen Modells, wobei die z3-Koordinate zwischen der z1- und der z2-Koordinate liegt,
v) Prüfen, ob der dritten Randpunkte des Volumenelements sich innerhalb des virtuellen Modells befinden oder ob sich das Volumenelement vollständig innerhalb der dritten Randpunkte des virtuellen Modells befindet,
und dass das Volumenelement in Schritt d) nur bei positiver Prüfung von zumindest ii) und iii) und v) als herzustellendes Volumenelement vorgemerkt wird.

3. Verfahren nach Anspruch 2, **dadurch gekennzeichnet, dass** die z3-Koordinate in der Mitte zwischen der z1- und der z2-Koordinate liegt.

4. Verfahren nach Anspruch 1, 2, oder 3, **dadurch gekennzeichnet, dass** die ersten Randpunkte durch Erstellen eines ersten Schnitts des virtuellen Modells in einer x-y-Ebene mit der z1-Koordinate des Volumenelements identifiziert werden.

5. Verfahren nach einem der Ansprüche 1 bis 4, **dadurch gekennzeichnet, dass** die zweiten Randpunkte durch Erstellen eines zweiten Schnitts des virtuellen Modells in einer x-y-Ebene mit der z2-Koordinate des Volumenelements identifiziert werden.

6. Verfahren nach einem der Ansprüche 2 bis 5, **dadurch gekennzeichnet, dass** die dritten Randpunkte durch Erstellen eines dritten Schnitts des virtuellen Modells in einer x-y-Ebene mit der z3-Koordinate des Volumenelements identifiziert werden.

7. Verfahren nach einem der Ansprüche 1 bis 6, **dadurch gekennzeichnet, dass** die Volumenelemente die Form eines Quaders oder eines Ellipsoids, insbesondere Rotationsellipsoids, aufweisen.

8. Steuervorrichtung zur Ansteuerung einer lithographiebasierten additiven Fertigungsvorrichtung, mit welcher ein dreidimensionales Bauteil aus einer Vielzahl von Volumenelementen herstellbar ist, umfassend eine Rechenvorrichtung, welche umfasst:
- einen elektronischen Speicher zum Speichern eines dreidimensionalen virtuellen Modells des Bauteils in einem virtuellen dreidimensionalen Raum mit einem Koordinatensystem umfassend eine x-, y- und z-Achse,
- Modellverarbeitungsmittel, welchen das virtuelle Modell des Bauteils zugeführt ist und in denen der virtuelle Raum des virtuellen Modells in eine Vielzahl von virtuellen Volumenelementen aufgeteilt ist, wobei jedes Volumenelement eine Erstreckung in der x-y-Ebene und eine sich von einer Koordinate z1 zu einer Koordinate z2 erstreckende Höhe in der z-Richtung aufweist,
wobei die Modellverarbeitungsmittel ausgebildet sind zum
i) Identifizieren von eine z1-Koordinate aufweisenden dritten Randpunkten des Volumenelements oder des virtuellen Modells und Identifizieren von eine z2-Koordinate aufweisenden dritten Randpunkten des Volumenelements oder des virtuellen Modells,
ii) Prüfen, ob die ersten Randpunkte des Volumenelements sich innerhalb des ersten Querschnitts des virtuellen Modells befinden oder ob sich das Volumenelement vollständig innerhalb der ersten Randpunkte des virtuellen Modells befindet, und
iii) Prüfen, ob die zweiten Randpunkte des Volumenelements sich innerhalb des zweiten Querschnitts des virtuellen Modells befinden oder ob sich das Volumenelement vollständig innerhalb der zwieten Randpunkte des virtuellen Modells befindet,
wobei die Modellverarbeitungsmittel ein Logikmodul umfassen, das ausgebildet ist, um nur bei positiver Prüfung von zumindest ii) und iii) das Volumenelement als herzustellendes Volumenelement vorzumerken,
- Codierungsmittel zur Erstellung von Steuerungsdaten umfassend Steueranweisungen zur additiven Fertigung der herzustellenden Volumenelemente,
- Datenübertragungsmittel zum Übermitteln der Steuerungsdaten an die Fertigungsvorrichtung.

9. Steuervorrichtung nach Anspruch 8, **dadurch gekennzeichnet, dass** die Modellverarbeitungsmittel ausgebildet sind zum
iv) Identifizieren von eine z3-Koordinate aufweisenden dritten Randpunkten des Volumenelements oder des virtuellen Modells, wobei die z3-Koordinate zwischen der z1- und der z2-Koordinate liegt, und
v) Prüfen, ob die dritten Randpunkten des Volumenelements sich innerhalb des dritten Querschnitts des virtuellen Modells befindet oder ob sich das Volumenelement vollständig innerhalb der dritten Randpunkte des virtuellen Modells befindet,
und dass das Logikmodul ausgebildet ist, um nur bei positiver Prüfung von zumindest ii) und iii) und v) als herzustellendes Volumenelement vorzumerken.

10. Steuervorrichtung nach Anspruch 9, **dadurch gekennzeichnet, dass** die z3-Koordinate in der Mitte zwischen der z1- und der z2-Koordinate liegt.

11. Vorrichtung zur lithographiebasierten generativen Fertigung eines dreidimensionalen Bauteils umfassend einen Materialträger für ein verfestigbares Material und eine Bestrahlungseinrichtung, die zur ortsselektiven Bestrahlung des verfestigbaren Materials mit wenigstens einem Strahl ansteuerbar ist, wobei die Bestrahlungseinrichtung eine optische Ablenkeinheit umfasst, um den wenigstens einen Strahl nacheinander auf Fokuspunkte innerhalb des Materials zu fokussieren, wodurch jeweils ein am Fokuspunkt befindliches Volumenelement des Materials mittels Multiphotonenabsorption verfestigbar ist, und weiters umfassend eine Steuervorrichtung nach einem der Ansprüche 8 bis 10 zur Ansteuerung der Bestrahlungseinrichtung, um das Bauteil entsprechend dem dreidimensionalen virtuellen Modell des Bauteils aus einer Vielzahl von verfestigten Volumenelementen aufzubauen.

12. Vorrichtung nach Anspruch 11, **dadurch gekennzeichnet, dass** die Bestrahlungseinrichtung ausgebildet ist, um das Bauteil schichtweise mit sich in der x-y-Ebene erstreckenden Schichten aufzubauen, und dass eine Verstelleinrichtung zur Verstellung des Materialträgers relativ zur Bestrahlungseinrichtung in der z-Richtung vorgesehen ist, sodass der Wechsel von einer Schicht zu einer nächsten Schicht durch die Verstelleinrichtung erfolgt.

13. Vorrichtung nach Anspruch 11 oder 12, **dadurch gekennzeichnet, dass** die Bestrahlungseinrichtung eine Laserlichtquelle umfasst und die Ablenkeinheit zum zeilenweisen Scannen des verfestigbaren Materials ausgebildet ist.
